# EUROPEAN PATENT SPECIFICATION

(11) **EP 4 385 867 B1**
(45) Date of publication and mention of the grant of the patent: **15.07.2026**
(21) Application number: 23200329.3
(22) Date of filing: 28.09.2023
(51) Int. Cl.: B62J 35/00, B62K 11/10, B62M 7/12

(54) **GAS TANK OF STRADDLE-TYPE VEHICLE WITH SWING ENGINE**
GASTANK EINES GRÄTSCHSITZFAHRZEUGS MIT SCHWENKMOTOR
RÉSERVOIR DE GAZ D'UN VÉHICULE DE TYPE À ENFOURCHER AVEC MOTEUR PIVOTANTE

(30) Priority: 15.12.2022 JP 2022199914
(43) Date of publication of application: 19.06.2024
(73) Proprietor: Suzuki Motor Corporation, Hamamatsu-shi, Shizuoka 432-8611 (JP)
(72) Inventor: OZEKI, Hisashi, Hamamatsu-shi, 432-8611 (JP)
(74) Representative: Haseltine Lake Kempner LLP

(56) References cited:
- EP-A1- 2 703 273
- EP-A2- 2 371 690
- JP-A- 2021 046 046

## Description

### TECHNICAL FIELD

The present invention relates to a straddle-type vehicle.

### BACKGROUND ART

A straddle-type vehicle is known in which a gasoline tank is provided in front of an engine (for example, see JP5811091A). In the straddle-type vehicle in JP5811091A, a down tube extends downward from a head pipe, and a main tube extends rearward from the middle of the down tube in an upper-lower direction. A lower portion of the down tube is bent rearward, and a rear portion of the bent down tube is further bent upward and joined to the middle of the main tube in a front-rear direction. A seat is supported on an upper side of a rear half portion of the main tube, and a unit swing engine is provided on a lower side of the rear half portion of the main tube. The gasoline tank is provided in a space surrounded by a front half portion of the main tube and the down tube.

In a case where a gas fuel engine such as a hydrogen engine is mounted in place of a gasoline engine in the straddle-type vehicle disclosed in JP5811091A, the travel distance is reduced if the gas tank has the same capacity as the gasoline tank. In order to secure the travel distance equivalent to that attained by the gasoline engine, it is necessary to increase the size of the gas tank. However, as the size of the gas tank increases, the longitudinal length of the vehicle becomes larger, which causes a problem that the turning performance deteriorates and the size of the vehicle increases.

EP 2 703 273 A1 discloses a lid lock structure for a saddle type vehicle including a lock member (112) capable of locking a lid (101) in a closed state fixed to an upper inner cover (53) and placed on upper frames (15, 15) below the upper inner cover (53). This document discloses the features of the preamble of claim 1.

EP 2 371 690 A1 discloses a motor scooter type vehicle (10) comprising a fuel filter (52) located on a lateral side of a cylinder unit (54) projectingly provided at a crankcase (53) of the unit swing type engine (29), and disposed in a space surrounded by a main frame (21L) and a rear frame (29) in side view of the vehicle.

### SUMMARY OF INVENTION

Aspect of non-limiting embodiments of the present disclosure relates to provide a straddle-type vehicle capable of reduce an increase in size of the vehicle when providing it with gas supply.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

The scope of the invention is defined by the appended claims.

### BRIEF DESCRIPTION OF DRAWINGS

Exemplary embodiment(s) of the present invention will be described in detail based on the following figures, wherein:
FIG. 1 is a left side view of a straddle-type vehicle according to the present embodiment;
FIG. 2 is a left side view of a vehicle internal structure according to the present embodiment;
FIG. 3 is a top view of the vehicle internal structure according to the present embodiment;
FIG. 4 is a side view showing a component layout of the straddle-type vehicle according to the present embodiment; and
FIG. 5 is a top view showing a component layout of the vehicle internal structure according to the present embodiment.

### DESCRIPTION OF EMBODIMENTS

A front frame forms a vehicle front side of a vehicle body frame of a straddle-type vehicle according to an aspect of the present invention. A gas tank configured to store gas fuel is located inside the front frame. A unit swing engine is supported by the front frame. A cylinder axis of the unit swing engine is horizontal or is inclined forward to be close to horizontal. The gas tank is located in front of the unit swing engine. The gas tank is inclined such that a front end of the gas tank is located higher than a rear end of the gas tank. Since the gas tank is inclined inside a pair of main frame, the longitudinal length of the vehicle is reduced even in a case where the gas tank is provided in front of the unit swing engine. A rear frame forms a vehicle rear side of the vehicle body frame. A second gas tank configured to store gas fuel is located inside the rear frame. The second gas tank is inclined in a vehicle width direction. Accordingly, the turning performance of the vehicle can be ensured, and the increase in size of the vehicle can be reduced.

### <Embodiment>

A gas fuel engine such as a hydrogen engine requires a gas tank having a larger capacity than a gasoline tank of a gasoline engine. A large capacity gas tank cannot be provided in a space where the gasoline tank of the gasoline engine is provided, and the gas tank having the same capacity as the gasoline tank shortens a travel distance. In a case where the longitudinal length of the vehicle increases in order to provide the larger capacity gas tank, the drivability deteriorates. Therefore, in a vehicle equipped with a gas fuel engine, there is a demand for a gas tank layout configured to install a large capacity gas tank and reduce deterioration of the drivability.

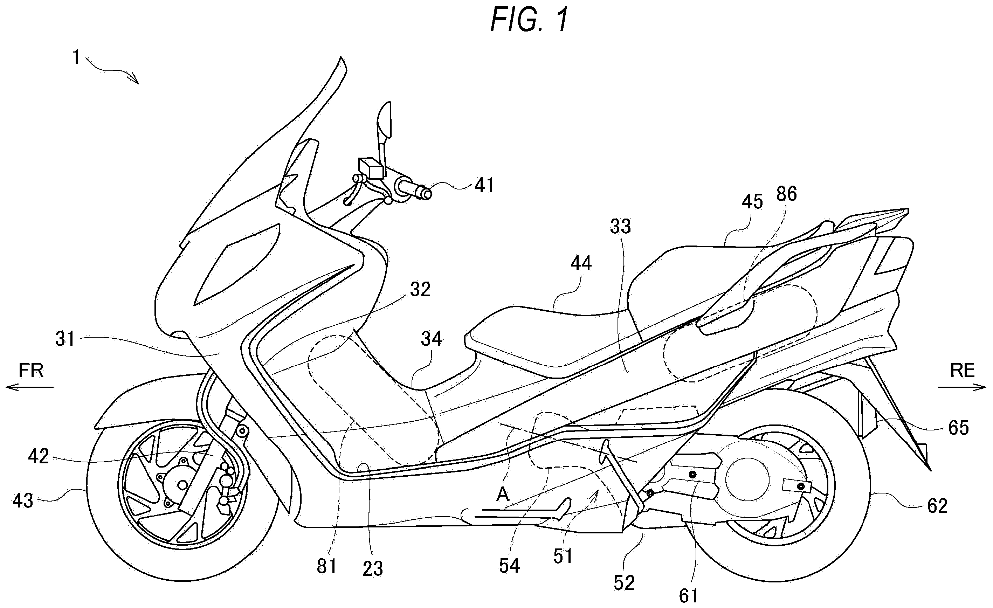

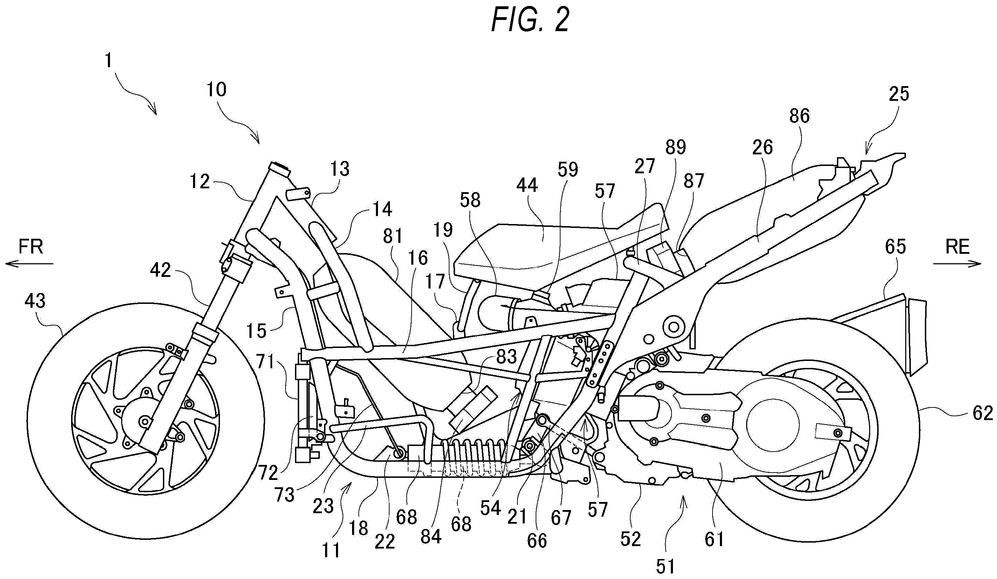

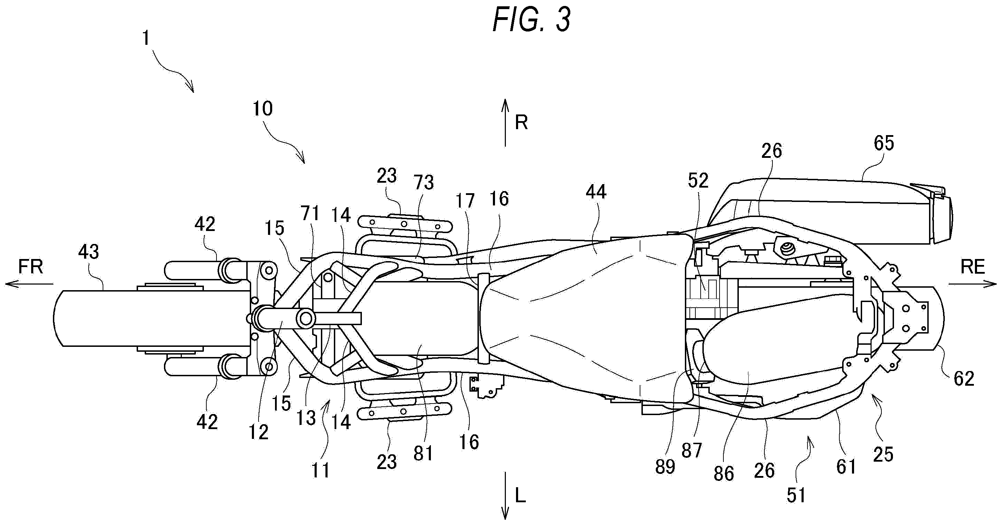

Hereinafter, a straddle-type vehicle according to the present embodiment will be described with reference to the accompanying drawings. FIG. 1 is a left side view of the straddle-type vehicle according to the present embodiment. FIG. 2 is a left side view of a vehicle internal structure according to the present embodiment. FIG. 3 is a top view of the vehicle internal structure according to the present embodiment. In the following drawings, an arrow FR indicates a vehicle front side, an arrow RE indicates a vehicle rear side, an arrow L indicates a vehicle left side, and an arrow R indicates a vehicle right side.

As shown in FIG. 1, a straddle-type vehicle 1 is implemented by mounting various covers, as vehicle body exteriors, on a vehicle body frame 10 (see FIG. 2) made of steel or aluminum alloy. A front cover 31 is provided on the vehicle front side, and a leg shield 32 configured to protect the feet of a rider is provided on a rear side of the front cover 31. A foot board 23 extends rearward from a lower end of the leg shield 32, and a rear cover 33 is provided behind the foot board 23. A center cover 34 is provided above the foot board 23 in a manner of connecting the leg shield 32 and the rear cover 33.

A handle 41 is provided on an upper side of the front cover 31, and a front wheel 43 is rotatably supported on a lower side of the front cover 31 via a pair of front forks 42. A rider seat 44 and a pillion seat 45 are provided on an upper side of the rear cover 33, and a continuously variable transmission (CVT) cover 61 is provided on a lower side of the rear cover 33. A rear wheel 62 is rotatably supported on a rear portion of the CVT cover 61. A belt-type continuously variable transmission (not shown) is accommodated inside the CVT cover 61, and a driving force of a unit swing engine 51 is transmitted to the rear wheel 62 via a belt.

The unit swing engine 51 is supported by the vehicle body frame 10, inside the rear cover 33. A cylinder axis A of the unit swing engine 51 is inclined forward to be close to horizontal. A cylinder assembly 54 extends forward of the vehicle from a crankcase 52. An air cleaner 57 (see FIG. 2) is connected to an upper portion of the cylinder assembly 54 through an intake pipe. A muffler 65 is connected to a lower portion of the cylinder assembly 54 through an exhaust pipe. The CVT cover 61 is attached to a left side of the crankcase 52. The unit swing engine 51 is swung together with the muffler 65, the CVT cover 61, and the rear wheel 62.

A first gas tank (a gas tank) 81 is accommodated inside the center cover 34. A second gas tank (another gas tank) 86 is accommodated inside the rear cover 33. Gas fuel is stored in the first gas tank 81 and the second gas tank 86. The gas fuel is supplied from the first gas tank 81 and the second gas tank 86 to the unit swing engine 51, and the unit swing engine 51 is driven by the gas fuel. In the present embodiment, the unit swing engine 51 is a hydrogen engine using hydrogen gas. Alternatively, the unit swing engine 51 may be other gas fuel engines using other gas fuel such as methane gas and propane gas.

As shown in FIGS. 2 and 3, a vehicle front side of the vehicle body frame 10 is formed by a front frame 11 of a cradle type in a side view, and a vehicle body rear side of the vehicle body frame 10 is formed by a rear frame 25 having an elliptical shape that is partly missing in a top view. In the front frame 11, a support frame 13 extends rearward and obliquely downward from an upper portion of the head pipe 12. A pair of first down frames 14 branch to the left and right from a lower portion of the support frame 13 and extend downward. A pair of second down frames 15 branch to the left and right from a lower portion of the head pipe 12 and extend downward. A pair of main frames 16 are connected to lower portions of the pair of first down frames 14 and the pair of second down frames 15.

The pair of main frames 16 extend toward the vehicle rear side, and intermediate portions of the pair of main frames 16 are connected to each other by a first bridge 17. A pair of lower frames 18 are connected to front ends of the pair of main frames 16. The pair of lower frames 18 extend from front portions to rear portions of the pair of main frames 16 to surround a first gas tank 81 from the bottom. A cradle shape of the front frame 11 is formed by the pair of main frames 16 and the pair of lower frames 18. The pair of lower frames 18 are provided with a pair of the foot boards 23.

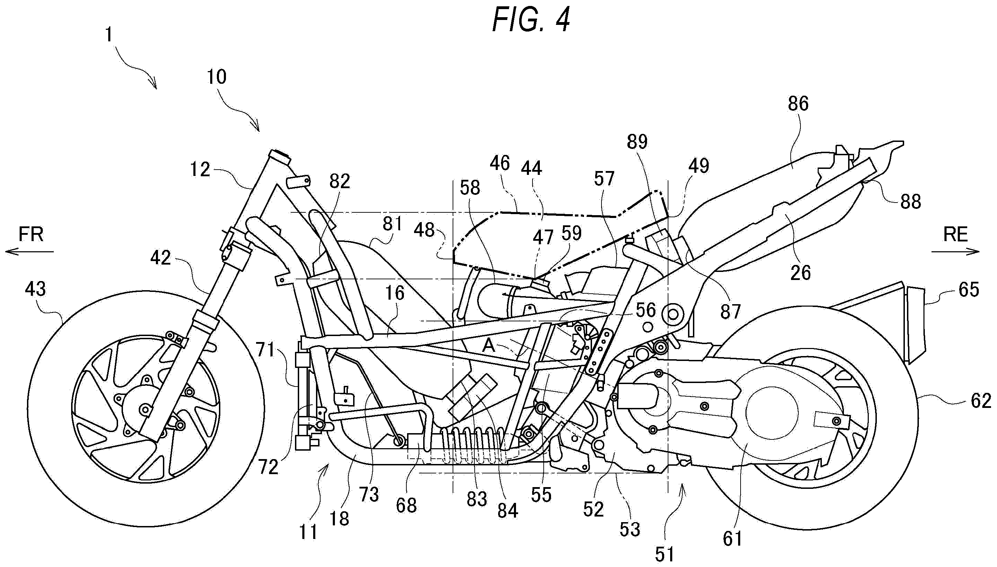

In the rear frame 25, a pair of seat rails 26 extend rearward from rear portions of the pair of main frames 16. A facing interval of the pair of seat rails 26 increases toward the middle of the rails, and then decreases toward rear ends of the rails. A pair of seat rails 26 are formed in an arch shape, and rear end portions of the pair of seat rails 26 are connected to each other. Front portions of the pair of seat rails 26 are connected to each other by a second bridge 27. The pair of seat rails 26 and the second bridge 27 form an elliptical shape that is partly missing in a top view, in which a part of the elliptical shape of the rear frame 25 is cut out (see FIG. 4).

A front portion of the rider seat 44 is supported by the first bridge 17 from the bottom via an upper bracket 19. A rear portion of the rider seat 44 is supported by the second bridge 27 from the bottom. Rear portions of the pair of lower frames 18 are connected to the second bridge 27. The second bridge 27 is supported by the pair of lower frames 18 from the bottom. The cylinder assembly 54 of the unit swing engine 51 is located between the pair of lower frames 18. The cylinder assembly 54, an air cleaner 57, an outlet tube 58, and a throttle body 59 are located below the rider seat 44.

An intermediate portion of an L-shaped cushion lever 66 is supported by the rear portions of the pair of lower frames 18 via a first lower bracket 21. The crankcase 52 of the unit swing engine 51 is connected to an upper end portion of the cushion lever 66 via a cushion rod 67. A second lower bracket 22 at front portions of the pair of lower frames 18 is connected to a lower end portion of the cushion lever 66 via a suspension 68. The suspension 68 expands and contracts as the unit swing engine 51 swings. Thus, unevenness of a road surface is absorbed, vibration is reduced, and the contact between the rear wheel 62 and the road surface is enhanced.

A radiator 71 is located at the front portions of the pair of lower frames 18. Heat is exchanged between cooling water from the unit swing engine 51 and traveling wind passing through the radiator 71, and heat of the cooling water from the unit swing engine 51 is radiated. A cooling fan 72 is located on a rear surface of the radiator 71, and external air is introduced into the radiator 71 by the cooling fan 72. In a case where the cooling water exceeds a predetermined temperature while the vehicle is stopped, the cooling fan 72 is configured to rotate to forcibly cool the cooling water in the radiator 71. A baffle plate 73 is located behind the radiator 71, and exhaust air from the radiator 71 is guided downward by the baffle plate 73.

The cylindrical first gas tank 81 having both ends bulged in a hemispherical shape is located inside the front frame 11. The first gas tank 81 is inclined forward, and a first tank valve (a tank valve) 84 is located at a rear end 83 of the first gas tank 81. The cylindrical second gas tank 86 having both ends bulged in a hemispherical shape is located inside the rear frame 25. The second gas tank 86 is inclined rearward, and a second tank valve (another tank valve) 89 is located at a front end 87 of the second gas tank 86. The first tank valve 84 and the second tank valve 89 is configured to control the inflow and outflow of gas fuel into and from the first tank valve 84 and the second tank valve 89.

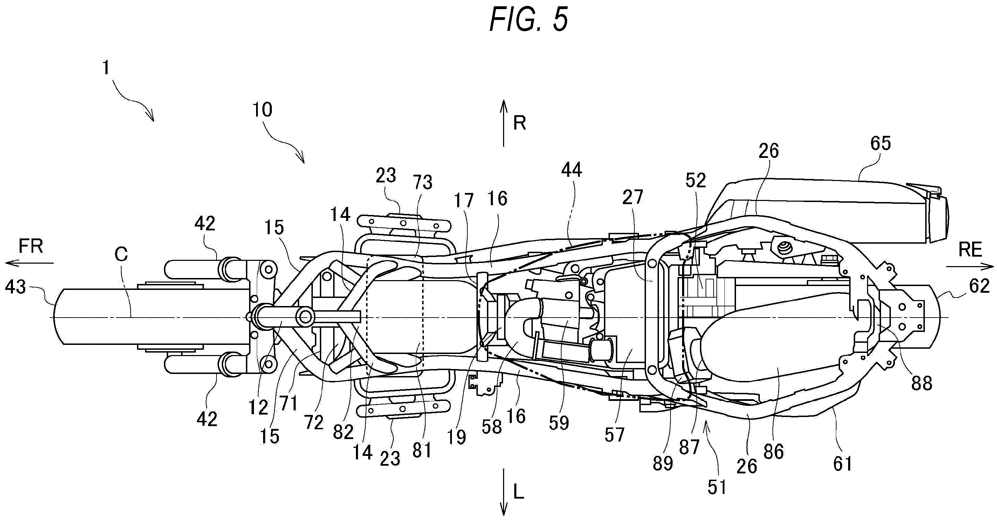

A component layout of the straddle-type vehicle will be described with reference to FIGS. 4 and 5. FIG. 4 is a side view showing a component layout of the straddle-type vehicle according to the present embodiment. FIG. 5 is a top view showing a component layout of the vehicle internal structure according to the present embodiment.

As shown in FIGS. 4 and 5, the cylinder axis A of the unit swing engine 51 is inclined forward to be close to horizontal. The first gas tank 81 is located in front of the unit swing engine 51. The first gas tank 81 is inclined such that a front end 82 of the first gas tank 81 is located higher than the rear end 83 of the first gas tank 81. An upper half portion of the first gas tank 81 is located above the main frame 16, and a lower half portion of the first gas tank 81 is located below the main frame 16. The first gas tank 81 is inclined in an upper-lower direction. Accordingly, the projection length of the first gas tank 81 when projected onto a horizontal surface is reduced, and the longitudinal length of the vehicle is reduced.

The rider seat 44 is located above the unit swing engine 51. The front end 82 of the first gas tank 81 is located below a seating surface 46 of the rider seat 44. The front end 82 of the first gas tank 81 is located above a lower end 47 of the rider seat 44. The first tank valve 84 of the rear end 83 of the first gas tank 81 is located below an upper surface 56 of a cylinder head 55. The first tank valve 84 of the rear end 83 of the first gas tank 81 is above a lower surface 53 of the crankcase 52. As the height difference between the front end 82 and the rear end 83 of the first gas tank 81 increases, the inclination of the first gas tank 81 increases, and the longitudinal length of the vehicle is reduced. The first gas tank 81 is inclined according to the center cover 34 (see FIG. 1), and the appearance of the vehicle is not impaired.

The second gas tank 86 is located behind the air cleaner 57, above the unit swing engine 51. The second gas tank 86 is inclined along the inclination of the seat rails 26, in a side view. The second gas tank 86 is inclined in a vehicle width direction to be accommodated between the pair of seat rails 26, in a top view. The second gas tank 86 is inclined in the vehicle width direction, the projection length of the second gas tank 86 when projected onto a vertical surface in a vehicle front-rear direction is reduced, and the longitudinal length of the vehicle is reduced. The weight balance in the front and rear of the vehicle is maintained by the first gas tank 81 on the vehicle front side and the second gas tank 86 on the vehicle rear side, and the second gas tank 86 can be provided without causing the weight distribution of the vehicle to deteriorate.

The muffler 65 configured to discharge exhaust gas from the unit swing engine 51 is located on a right side of the unit swing engine 51. The muffler 65 is located on one side (the right side in the present embodiment), in the vehicle width direction, of a center line C passing through the vehicle front-rear direction. A second tank valve 89 is located on the other side (the left side in the present embodiment), in the vehicle width direction, of the center line C. A rear end 88 of the second gas tank 86 is located on the center line C. The second tank valve 89 is inclined toward the other side, in the vehicle width direction, of the center line C. The center of gravity of the second tank valve 89 is located on the other side, in the vehicle width direction, of the center line C.

Since the muffler 65 and the second tank valve 89 are located on opposite sides of the center line C, the heat damage of the muffler 65 to the second tank valve 89 is prevented. Since the weight balance in the left and right is maintained by the second tank valve 89 and the muffler 65, the second gas tank 86 can be provided without sacrificing the steering stability of the vehicle. The inclination of the second gas tank 86 is reduced, since the second gas tank 86 is inclined not only in the upper-lower direction but also in the vehicle width direction. Therefore, the distance between the second gas tank 86 and the rear wheel 62 is widened, and a sufficient amount of stroke in a case where the rear wheel 62 swings is secured, and the running performance on rough roads is improved.

The first tank valve 84 of the first gas tank 81 and the second tank valve 89 of the second gas tank 86 are located below the rider seat 44. More specifically, the first tank valve 84 is located behind the front end 48 of the rider seat 44, and a part of the second tank valve 89 is located forward of the rear end 49 of the rider seat 44. The mass concentration is achieved by bringing the first tank valve 84 and the second tank valve 89, which are heavy objects, close to the center of gravity of the straddle-type vehicle 1. Accordingly, the moment of inertia around a rotation axis (a yaw axis) extending vertically from the center of gravity of the straddle-type vehicle 1 is reduced, and the turning performance of the vehicle is improved.

The throttle body 59 is provided in front of the air cleaner 57, above the cylinder head 55. The first tank valve 84 is located below the throttle body 59. The second tank valve 89 is located above the throttle body 59. **In** a top view, the throttle body 59 is located on the center line C, and the first tank valve 84 and the second tank valve 89 are brought close to the throttle body 59. Therefore, the lengths of the hoses from the first tank valve 84 and the second tank valve 89 toward the throttle body 59 can be secured to such an extent that the swing of the unit swing engine 51 can be followed.

The radiator 71 is located at the same height as the first tank valve 84 of the rear end 83 of the first gas tank 81, below the front end 82 of the first gas tank 81. The first gas tank 81 is inclined using an upper space of the radiator 71. The first tank valve 84 is located between the radiator 71 and the unit swing engine 51. The cooling fan 72 on the rear surface of the radiator 71 overlaps the first tank valve 84 in the front-rear direction. Therefore, the baffle plate 73 is located between the radiator 71 and the first gas tank 81 to guide the exhaust air from the radiator 71 (the cooling fan 72) downward.

**In** a side view, the baffle plate 73 extends rearward and obliquely downward from the vicinity of an upper edge of the radiator 71 to the vicinity of a front end of the suspension 68. In a top view, the baffle plate 73 extends over the pair of main frames 16 and the lower frame 18. Since the baffle plate 73 is wider than the first gas tank 81 behind the radiator 71, the exhaust air from the radiator 71 is guided downward along the baffle plate 73. Since the front of the first gas tank 81 is partitioned by the baffle plate 73, the exhaust air from the radiator 71 is less likely to directly hit the first gas tank 81, and the temperature rise of the first gas tank 81 is reduced.

As described above, according to the straddle-type vehicle 1 in the present embodiment, by providing the first gas tank 81 and the second gas tank 86, it is possible to increase the capacity of the gas fuel and secure a sufficient traveling distance. Even in a case where the first gas tank 81 and the second gas tank 86 are provided, the longitudinal length of the vehicle is reduced. The weight balance in the front, rear, left, and right of the vehicle is maintained, and the mass concentration is achieved. Therefore, it is possible to prevent the deterioration of the drivability of the vehicle and increase in size of the vehicle.

**In** the present embodiment, the configuration has been described in which the gas tanks are provided on both the front and rear sides of the straddle-type vehicle. Alternatively, the gas tanks may be provided only on the front side or only on the rear side of the straddle-type vehicle.

**In** the present embodiment, the cylinder axis of the unit swing engine is inclined forward to be close to horizontal. Alternatively, the cylinder axis of the unit swing engine may be horizontal.

**In** the present embodiment, the first and second gas tanks are formed in a cylindrical shape with both ends bulging in a hemispherical shape. Alternatively, the shape of the first and second gas tanks is not particularly limited, as long as the first and second gas tanks have a shape capable of storing gas fuel.

**In** the present embodiment, the front end of the gas tank is located above the lower end of the rider seat, and the rear end of the gas tank is located below the upper surface of the cylinder head. Alternatively, the gas tank may be inclined such that the front end of the gas tank is located higher than the rear end of the gas tank.

**In** the present embodiment, the front frame is formed in a cradle shape, and the rear frame is formed in an elliptical shape that is partly missing. However, the shapes of the front frame and the rear frame are not particularly limited. The front frame may be formed in a shape in which the first gas tank can be located, and the rear frame may be formed in a shape in which the second gas tank can be located.

In the present embodiment, the second gas tank is inclined in the vehicle width direction. Alternatively, if there is no heat damage from the muffler or interference from the rear wheel, the second gas tank may be provided on the center line of the vehicle.

Further, the layout of the gas tank according to the present embodiment is not limited to the above-described straddle-type vehicle, and may be used in other types of straddle-type vehicles. The straddle-type vehicle is not limited to a general vehicle in which a driver rides on a seat in a posture of straddling the seat, and includes a scooter-type vehicle in which the driver rides on the seat without straddling the seat.

As described above, the first aspect provides a straddle-type vehicle (1). The straddle-type vehicle (1) includes: a front frame (11) forming a vehicle front side of a vehicle body frame (10); a gas tank (the first gas tank 81) configured to store gas fuel, inside the front frame; and a unit swing engine (51) supported by the front frame. A cylinder axis (A) of the unit swing engine is horizontal or is inclined forward to be close to horizontal. The gas tank is located in front of the unit swing engine, and the gas tank is inclined such that a front end (82) of the gas tank is located higher than a rear end (83) of the gas tank. According to this configuration, since the gas tank is inclined inside the front frame, the longitudinal length of the vehicle is reduced even in a case where the gas tank is provided in front of the unit swing engine. The straddle-type vehicle further includes: a rear frame (25) forming a vehicle rear side of the vehicle body frame; and another gas tank (the second gas tank 86) configured to store gas fuel inside the rear frame. The other gas tank is inclined in a vehicle width direction. According to this configuration, the capacity of the gas fuel can be increased by providing, in addition to the gas tank, the other gas tank. Since the gas tank is inclined inside the rear frame, the longitudinal length of the vehicle is reduced. The weight balance in the front and rear of the vehicle is maintained by the gas tank and the other gas tank, and the other gas tank can be provided without causing the weight distribution of the vehicle to deteriorate. Accordingly, the turning performance of the vehicle can be ensured, and the increase in size of the vehicle can be reduced.

The straddle-type vehicle according to a second aspect is directed to the first aspect. The straddle-type vehicle further includes a rider seat (44) located above the unit swing engine. The front end of the gas tank is located above a lower end (47) of the rider seat. According to this configuration, the inclination of the gas tank is increased, and the longitudinal length of the vehicle can be reduced.

The straddle-type vehicle according to a third aspect is directed to the first aspect and the second aspect, in which a tank valve (the first tank valve 84) is located at the rear end of the gas tank, and the tank valve is located below an upper surface (56) of a cylinder head of the unit swing engine. According to this configuration, the inclination of the gas tank is increased, and the longitudinal length of the vehicle can be reduced.

The straddle-type vehicle according to a fourth aspect is directed to any one of the first aspect to the third aspect. The straddle-type vehicle further includes a radiator (71) configured to radiate heat of cooling water from the unit swing engine. The radiator is located at the same height as the rear end of the gas tank below the front end of the gas tank. According to this configuration, by inclining the gas tank using the upper space of the radiator, the longitudinal length of the vehicle can be reduced even in a case where the gas tank is provided.

The straddle-type vehicle according to a fifth aspect is directed to the fourth aspect. The straddle-type vehicle further includes a baffle plate (73) between the radiator and the gas tank, the baffle plate being configured to guide exhaust air from the radiator downward. According to this configuration, the exhaust air from the radiator is less likely to directly hit the gas tank, and the temperature rise of the gas tank can be reduced.

The straddle-type vehicle according to a sixth aspect is directed to the fifth aspect. The straddle-type vehicle further includes a muffler (65) configured to discharge exhaust gas from the unit swing engine. The other gas tank is located above the unit swing engine, and another tank valve (the second tank valve 89) is located at a front end (87) of the other gas tank. The muffler is located on one side, in the vehicle width direction, of a center line (C) passing through a vehicle front-rear direction, the other tank valve is located on the other side, in the vehicle width direction, of the center line, and a rear end of the other gas tank is located on the center line. According to this configuration, since the muffler and the tank valve are located on opposite sides of the center line, it is possible to prevent the heat damage of the muffler to the other tank valve. The weight balance in the left and right is maintained by the other tank valve and the muffler, and the other gas tank can be provided without sacrificing the steering stability of the vehicle. The tank valve and the other tank valves, which are heavy objects, are brought close to the center of gravity of the vehicle, the mass concentration can be achieved, and the turning performance of the vehicle can be improved.

The straddle-type vehicle according to a seventh aspect is directed to the sixth aspect, in which a throttle body (59) of the unit swing engine is located on the center line in front of the other gas tank. According to this configuration, the length of the hose toward the throttle body can be secured to such an extent that the swing of the unit swing engine can be followed.

Although the present embodiment has been described, as another embodiment, the above-described embodiment and modification may be combined entirely or partially, without departing from the scope of the present invention defined by the appended claims.

The technique according to the present invention is not limited to the above-described embodiment, and may be variously changed, replaced, or modified without departing from the gist of the technical concept, defined by the claims. Further, the present disclosure may be implemented by other methods as long as the technical concept can be implemented by the methods through advance of the technique or other derivative techniques. Therefore, the claims cover all embodiments that may fall within the scope of the technical concept.

## Claims

1. A straddle-type vehicle (1) comprising:
a front frame (11) forming a vehicle front side of a vehicle body frame (10);
a rear frame (25) forming a vehicle rear side of the vehicle body frame (10);
a first gas tank (81) configured to store gas fuel, inside the front frame (11); and
a unit swing engine (51) supported by the front frame (11),
wherein a cylinder axis (A) of the unit swing engine (51) is horizontal or is inclined forward to be close to horizontal,
the first gas tank (81) is located in front of the unit swing engine (51), and
the first gas tank (81) is inclined such that a front end (82) of the first gas tank (81) is located higher than a rear end (83) of the first gas tank (81),
the straddle-type vehicle **characterized by**:
a second gas tank (86) configured to store gas fuel, inside the rear frame (25),
wherein the second gas tank (86) is inclined in a vehicle width direction.

2. The straddle-type vehicle (1) according to claim 1, further comprising:
a rider seat (44) located above the unit swing engine (51),
wherein the front end (82) of the first gas tank (81) is located above a lower end (47) of the rider seat (44).

3. The straddle-type vehicle (1) according to claim 1 or 2,
wherein a first tank valve (84) is located at the rear end (83) of the first gas tank (81), and
the first tank valve (44) is located below an upper surface (56) of a cylinder head of the unit swing engine (51).

4. The straddle-type vehicle (1) according to claim 1 or 2, further comprising:
a radiator (71) configured to radiate heat of cooling water from the unit swing engine (51),
wherein the radiator (71) is located at the same height as the rear end (83) of the first gas tank (81), below the front end (82) of the first gas tank (81).

5. The straddle-type vehicle (1) according to claim 4, further comprising:
a baffle plate (73) between the radiator (71) and the first gas tank (81), the baffle plate (73) being configured to guide exhaust air from the radiator (71) downward.

6. The straddle-type vehicle (1) according to claim 1, further comprising:
a muffler (65) configured to discharge exhaust gas from the unit swing engine (51),
wherein the second gas tank (86) is located above the unit swing engine (51),
a second tank valve (87) is located at a front end of the second gas tank (86),
wherein the muffler (65) is located on one side, in the vehicle width direction, of a center line (C) passing through a vehicle front-rear direction,
the second tank (86) valve is located on the other side, in the vehicle width direction, of the center line (C), and
a rear end of the second gas tank (86) is located on the center line (C).

7. The straddle-type vehicle according to claim 6,
wherein a throttle body (59) of the unit swing engine (51) is located on the center line (C), in front of the second gas tank (86).

## Patentansprüche

1. Grätschsitzfahrzeug (1), umfassend:
einen vorderen Rahmen (11), der eine Fahrzeugvorderseite eines Fahrzeugkarosserierahmens (10) bildet;
einen hinteren Rahmen (25), der eine Fahrzeugrückseite des Fahrzeugkarosserierahmens (10) bildet;
einen ersten Gastank (81), der konfiguriert ist, um Gaskraftstoff zu speichern, innerhalb des vorderen Rahmens (11); und
einen Triebwerksschwenkmotor (51), der durch den vorderen Rahmen (11) gestützt wird,
wobei eine Zylinderachse (A) des Triebwerksschwenkmotors (51) horizontal ist oder nach vorne geneigt ist, um nahe an horizontal zu sein,
der erste Gastank (81) vor dem Triebwerksschwenkmotor (51) angeordnet ist, und
der erste Gastank (81) derart geneigt ist, dass ein vorderes Ende (82) des ersten Gastanks (81) höher angeordnet ist als ein hinteres Ende (83) des ersten Gastanks (81),
das Grätschsitzfahrzeug **gekennzeichnet durch**:
einen zweiten Gastank (86), der konfiguriert ist, um Gaskraftstoff zu speichern, innerhalb des hinteren Rahmens (25),
wobei der zweite Gastank (86) in einer Fahrzeugbreitenrichtung geneigt ist.

2. Grätschsitzfahrzeug (1) nach Anspruch 1, ferner umfassend:
einen Fahrersitz (44), der über dem Triebwerksschwenkmotor (51) angeordnet ist,
wobei das vordere Ende (82) des ersten Gastanks (81) über einem unteren Ende (47) des Fahrersitzes (44) angeordnet ist.

3. Grätschsitzfahrzeug (1) nach Anspruch 1 oder 2,
wobei ein erstes Tankventil (84) am hinteren Ende (83) des ersten Gastanks (81) angeordnet ist, und
das erste Tankventil (44) unter einer oberen Fläche (56) eines Zylinderkopfs des Triebwerksschwenkmotors (51) angeordnet ist.

4. Grätschsitzfahrzeug (1) nach Anspruch 1 oder 2, ferner umfassend:
einen Kühler (71), der konfiguriert ist, um Wärme von Kühlwasser aus dem Triebwerksschwenkmotor (51) abzustrahlen,
wobei der Kühler (71) auf derselben Höhe wie das hintere Ende (83) des ersten Gastanks (81), unter dem vorderen Ende (82) des ersten Gastanks (81), angeordnet ist.

5. Grätschsitzfahrzeug (1) nach Anspruch 4, ferner umfassend:
ein Leitblech (73) zwischen dem Kühler (71) und dem ersten Gastank (81), wobei das Leitblech (73) konfiguriert ist, um Abluft aus dem Kühler (71) nach unten zu leiten.

6. Grätschsitzfahrzeug (1) nach Anspruch 1, ferner umfassend:
einen Schalldämpfer (65), der konfiguriert ist, um Abgas aus dem Triebwerksschwenkmotor (51) auszustoßen,
wobei der zweite Gastank (86) über dem Triebwerksschwenkmotor (51) angeordnet ist,
ein zweites Tankventil (87) an einem vorderen Ende des zweiten Gastanks (86) angeordnet ist,
wobei der Schalldämpfer (65) auf einer Seite, in der Fahrzeugbreitenrichtung, einer Mittellinie (C) angeordnet ist, die durch eine Fahrzeug-Vorwärts-Rückwärts-Richtung verläuft,
das zweite Tank(86)-Ventil auf der anderen Seite, in der Fahrzeugbreitenrichtung, der Mittellinie (C) angeordnet ist, und
ein hinteres Ende des zweiten Gastanks (86) auf der Mittellinie (C) angeordnet ist.

7. Grätschsitzfahrzeug nach Anspruch 6,
wobei ein Drosselklappengehäuse (59) des Triebwerksschwenkmotors (51) auf der Mittellinie (C), vor dem zweiten Gastank (86), angeordnet ist.

## Revendications

1. Véhicule de type à califourchon (1) comprenant :
un châssis avant (11) formant un côté avant de véhicule d'un châssis de carrosserie de véhicule (10) ;
un châssis arrière (25) formant un côté arrière de véhicule du châssis de carrosserie de véhicule (10) ;
un premier réservoir d'essence (81) configuré pour stocker du carburant essence, à l'intérieur du châssis avant (11) ; et
un moteur à pivot unitaire (51) soutenu par le châssis avant (11),
dans lequel un axe de cylindre (A) du moteur à pivot unitaire (51) est horizontal ou incliné vers l'avant pour être proche de l'horizontale,
le premier réservoir d'essence (81) est situé à l'avant du moteur à pivot unitaire (51), et
le premier réservoir d'essence (81) est incliné de telle sorte qu'une extrémité avant (82) du premier réservoir d'essence (81) soit située plus haut qu'une extrémité arrière (83) du premier réservoir d'essence (81),
le véhicule de type à califourchon étant **caractérisé par** :
un second réservoir d'essence (86) configuré pour stocker du carburant essence, à l'intérieur du châssis arrière (25),
dans lequel le second réservoir d'essence (86) est incliné dans une direction de largeur de véhicule.

2. Véhicule de type à califourchon (1) selon la revendication 1, comprenant en outre :
un siège conducteur (44) situé au-dessus du moteur à pivot unitaire (51),
dans lequel l'extrémité avant (82) du premier réservoir d'essence (81) est située au-dessus d'une extrémité inférieure (47) du siège conducteur (44).

3. Véhicule de type à califourchon (1) selon la revendication 1 ou 2,
dans lequel une première vanne de réservoir (84) est située au niveau de l'extrémité arrière (83) du premier réservoir d'essence (81), et
la première vanne de réservoir (44) est située au-dessous d'une surface supérieure (56) d'une culasse de cylindre du moteur à pivot unitaire (51).

4. Véhicule de type à califourchon (1) selon la revendication 1 ou 2, comprenant en outre :
un radiateur (71) configuré pour dissiper de la chaleur d'eau de refroidissement à partir du moteur à pivot unitaire (51),
dans lequel le radiateur (71) est situé à la même hauteur que l'extrémité arrière (83) du premier réservoir d'essence (81), au-dessous de l'extrémité avant (82) du premier réservoir d'essence (81).

5. Véhicule de type à califourchon (1) selon la revendication 4, comprenant en outre :
une plaque déflectrice (73) située entre le radiateur (71) et le premier réservoir d'essence (81), la plaque déflectrice (73) étant configurée pour guider de l'air d'échappement à partir du radiateur (71) vers le bas.

6. Véhicule de type à califourchon (1) selon la revendication 1, comprenant en outre :
un silencieux (65) configuré pour évacuer du gaz d'échappement à partir du moteur à pivot unitaire (51),
dans lequel le second réservoir d'essence (86) est situé au-dessus du moteur à pivot unitaire (51),
une seconde vanne de réservoir (87) est située au niveau d'une extrémité avant du second réservoir d'essence (86),
dans lequel le silencieux (65) est situé d'un côté, dans la direction de largeur de véhicule, d'une ligne centrale (C) passant à travers une direction avant-arrière de véhicule,
la vanne du second réservoir (86) est située de l'autre côté, dans la direction de largeur de véhicule, de la ligne centrale (C), et
une extrémité arrière du second réservoir d'essence (86) est située sur la ligne centrale (C).

7. Véhicule de type à califourchon selon la revendication 6,
dans lequel un boîtier papillon (59) du moteur à pivot unitaire (51) est situé sur la ligne centrale (C), à l'avant du second réservoir d'essence (86).
